# EUROPÄISCHE PATENTSCHRIFT

(11) **EP 3 007 937 B1**
(45) Veröffentlichungstag und Bekanntmachung des Hinweises auf die Patenterteilung: **11.01.2017**
(21) Anmeldenummer: 14725965.9
(22) Anmeldetag: 21.05.2014
(51) Int. Cl.: B60R 16/03, H02J 7/14, H02J 1/10

(54) **KRAFTFAHRZEUG MIT ZWEI BORDNETZEN MIT UNTERSCHIEDLICHEN BORDNETZSPANNUNGEN**
MOTOR VEHICLE HAVING TWO VEHICLE ELECTRICAL SYSTEMS WITH DIFFERENT VEHICLE-ELECTRICAL-SYSTEM VOLTAGES
VÉHICULE À MOTEUR DOTÉ DE DEUX RÉSEAUX DE BORD AYANT DES TENSIONS DE RÉSEAU DE BORD DIFFÉRENTES

(30) Priorität: 12.06.2013 DE 102013009801
(43) Veröffentlichungstag der Anmeldung: 20.04.2016
(73) Patentinhaber: AUDI AG, 85045 Ingolstadt (DE)
(72) Erfinder: RÖDEL, Reinhold, 93326 Abensberg (DE)
(74) Vertreter: Herbst, Matthias Heinz
(86) Internationale Anmeldenummer: PCT/EP2014/001367
(87) Internationale Veröffentlichungsnummer: WO 2014/198378

(56) Entgegenhaltungen:
- DE-A1- 10 160 266
- DE-A1- 10 231 089
- DE-A1-102006 036 425
- DE-A1-102008 054 706
- DE-A1-102010 054 191
- DE-A1-102012 007 225

## Beschreibung

Die Erfindung betrifft ein Kraftfahrzeug mit einem ersten Bordnetz mit einer ersten Spannungsquelle, die eine erste Bordnetzspannung bereitstellt, und einem zweiten Bordnetz mit einer zweiten Spannungsquelle, die eine von der ersten Bordnetzspannung verschiedene zweite Bordnetzspannung bereitstellt, wobei beide Bordnetzspannungen Gleichspannungen sind, wobei wenigstens eine Netztrenneinrichtung einen Anschlusspunkt des ersten Bordnetzes und einen Anschlusspunkt des zweiten Bordnetzes verbindet. Ein Bordnetz gemäß dem Oberbegriff von Anspruch 1 ist aus der Schrift DE 101 60 266 A1 bekannt

Ein Großteil der im Einsatz befindlichen Kraftfahrzeugflotte weist lediglich ein einzelnes 12 V-Bordnetz auf. Insbesondere in Anbetracht der zunehmenden Bedeutung elektrischer Antriebe oder Hybridantriebe für Kraftfahrzeuge ist es wünschenswert, höhere Spannungen in Bordnetzen zu nutzen. Zugleich sollen häufig Teile der Bordelektronik des Kraftfahrzeugs weiterhin in einem Netz mit 12 V-Bordspannung betrieben werden. Daher kann es vorteilhaft sein, in einem Kraftfahrzeug zwei Bordnetze mit unterschiedlichen Bordnetzspannungen vorzusehen.

Werden in einem Kraftfahrzeug zwei verschiedene Bordnetze genutzt, ist es häufig notwendig, Informationen von einem Bordnetz in das andere Bordnetz zu transportieren. So kann beispielsweise ein Kommunikationsbus, wie beispielsweise ein CAN-Bus, Teil eines Netzes mit einer relativ niedrigen Bordnetzspannung sein. Dennoch kann es beispielsweise zweckmäßig sein, eine Motorsteuerung, die Teil eines Bordnetzes mit einer zweiten, höheren Bordnetzspannung ist, über diesen Bus anzusteuern. In diesem Fall müssen Informationen von einem Bordnetz mit einer niedrigeren Bordnetzspannung in ein Bordnetz mit einer höheren Bordnetzspannung transportiert werden. Andererseits werden durch die Komponenten in dem Bordnetz mit höherer Bordnetzspannung unter Umständen Messwerte, Fehlersignale oder Ähnliches bereitgestellt, die anschließend wieder in den Kommunikationsbus eingespeist werden sollen. In diesem Fall ist eine Kommunikation von dem Bordnetz mit der höheren Bordnetzspannung zu dem Bordnetz mit der niedrigeren Bordnetzspannung notwendig.

Wesentlich für einen Informationsaustausch zwischen zwei Bordnetzen mit verschiedenen Bordnetzspannungen ist, dass ein Kurzschluss zwischen diesen beiden Bordnetzen verhindert wird. Würde ein Bordnetz mit einer niedrigeren Bordnetzspannung, also beispielsweise 12 V, und ein Bordnetz mit einer höheren Bordnetzspannung, beispielsweise 48 V, kurzgeschlossen, könnte dies dazu führen, dass an Komponenten, die für einen Betrieb mit der niedrigeren Bordnetzspannung ausgebildet sind, die höhere Bordnetzspannung anliegt, was zu Fehlfunktionen und eventuell sogar zu dauerhaften Beschädigungen der Komponenten führen kann.

Typischerweise werden deshalb Trennkoppler zum Informationsaustausch genutzt, die eine stromfreie Informationsübertragung zwischen den Netzen ermöglichen. Ein Trennkoppler kann beispielsweise ein Optokoppler sein, bei dem durch ein Spannungssignal des Bordnetzes, von dem Informationen gesendet werden sollen, eine Lichtquelle, beispielsweise eine Leuchtdiode, betrieben wird, deren Licht die Leitfähigkeit eines Fototransistors oder eines ähnlichen Bauteils in dem Bordnetz beeinflusst, in das Informationen übertragen werden sollen. Hierdurch erfolgt eine vollständige elektrische Entkopplung der beiden Bordnetze.

Daneben werden auch Trennkoppler genutzt, die statt einer optischen Kopplung der beiden Bordnetze eine elektromagnetische Kopplung vorsehen, beispielsweise Trennkoppler, die einen miniaturisierten Transformator umfassen, oder die auf der Signal gebenden Seite eine Spule und auf der Signal empfangenden Seite eine Struktur mit Riesenmagnetowiderstand umfassen. Nachteilig an diesen Lösungen ist, dass Trennkoppler relativ große und relativ teure Komponenten sind.

Der Erfindung liegt daher die Aufgabe zugrunde, ein Kraftfahrzeug anzugeben, das eine Informationsübertragung zwischen zwei Bordnetzen in einer Weise ermöglicht, die zuverlässig einen Kurzschluss zwischen diesen Bordnetzen verhindert.

Zur Lösung dieser Aufgabe ist bei einem Kraftfahrzeug der eingangs genannten Art erfindungsgemäß vorgesehen, dass die Netztrenneinrichtung wenigstens ein Halbleiterbauelement umfasst, wobei die Netztrenneinrichtung eine Sperrrichtung, in der unterhalb einer Durchbruchspannung im wesentlichen kein Stromtransport erfolgt, und eine Durchlassrichtung, in der oberhalb einer Mindestspannung ein Stromtransport erfolgt, aufweist, wobei die Durchlassrichtung der Netztrenneinrichtung von dem ersten Bordnetz in das zweite Bordnetz gerichtet ist, womit durch Steuerung einer Spannung am Anschlusspunkt des ersten Bordnetzes ein erstes Signal von dem ersten Bordnetz in das zweite Bordnetz übertragbar ist und/oder womit durch Steuerung einer steuerbaren Impedanz zwischen dem Anschlusspunkt des zweiten Bordnetzes und einem Referenzpotential, das ein gemeinsames Referenzpotential für beide Bordnetze bildet, ein zweites Signal von dem zweiten Bordnetz in das erste Bordnetz übertragbar ist.

Der Erfindung liegt die Idee zugrunde, dass bei der Informationsübertragung zwischen den Bordnetzen eines Kraftfahrzeugs zwar verhindert werden muss, dass die Netze kurzgeschlossen werden, und insbesondere, dass eine höhere Bordnetzspannung in das Bordnetz mit der niedrigeren Bordnetzspannung "durchschlägt", eine vollständige galvanische Trennung der beiden Bordnetze jedoch nicht notwendig ist. Typischerweise wird in einem Kraftfahrzeug für beide Bordnetze ohnehin ein gemeinsames Referenz- bzw. Erdpotential genutzt, das beispielsweise mit der Karosserie verbunden ist. Die Verbindung der beiden Bordnetze mit diesem Erdpotential erfolgt zwar üblicherweise an unterschiedlichen Punkten, dennoch ist über dieses gemeinsame Erdpotential eine stromleitende Kopplung der Bordnetze gegeben, wodurch die beiden Bordnetze galvanisch gekoppelt sind.

Da also ohnehin bereits eine galvanische Kopplung der Bordnetze vorhanden ist, muss bei der Signalübertragung nicht auf eine vollständige galvanische Trennung geachtet werden. Es ist ausschließlich entscheidend, einen Kurzschluss zwischen den Netzen und damit ein Anlegen der hohen Spannung an das Bordnetz, das zum Betrieb mit der niedrigeren Spannung ausgebildet ist, zu vermeiden.

Unter diesem Gesichtspunkt ist es nicht nachteilig, wenn Strom von dem ersten Bordnetz in das zweite Bordnetz fließt, solange ein Stromtransport vom zweiten Bordnetz in das erste Bordnetz verhindert wird. Ein solcher gerichteter Stromtransport kann durch Halbleiterbauelemente, insbesondere Dioden, aber auch entsprechend geschaltete Feldeffekttransistoren oder ähnliche Bauelemente, erreicht werden. Solche Halbleiterbauelemente weisen eine Sperrrichtung auf, in der erst ab einer gewissen relativ hohen Spannung ein Strom fließt. Wird das Halbleiterbauelement derart gewählt, dass die Durchbruchsspannung, also die Spannung ab der ein Stromfluss in Sperrrichtung möglich ist, größer ist als der Unterschied der Bordnetzspannung im ersten und im zweiten Bordnetz, so wird dadurch ein Stromfluss in Sperrrichtung nahezu vollständig verhindert. Es fließt nur ein sehr geringer Leckstrom, der beispielsweise kleiner als 1 µA sein kann. Die Leckströme, die in Sperrrichtung der Halbleiterbauelemente fließen, sind eine inhärente Eigenschaft von Halbleiterbauelementen. Es ist vorteilhaft, Halbleiterbauelemente mit möglichst kleinen Leckströmen zu wählen, eine vollständige Verhinderung von Leckströmen ist jedoch nicht möglich. Diese geringen Leckströme führen jedoch nur zu unwesentlichen Potenzialänderungen im ersten Bordnetz, die vernachlässigt werden können.

Das Halbleiterbauelement weist in Durchlassrichtung nur einen sehr geringen Widerstand auf. Damit ist ein Stromtransport vom ersten in das zweite Bordnetz leicht möglich.

Zum Signaltransport zwischen den Stromnetzen müssen zwei Fälle unterschieden werden. Ist die Spannung am Anschlusspunkt des zweiten Bordnetzes höher als die Spannung als Anschlusspunkt des ersten Bordnetzes, so erfolgt kein Stromtransport durch die Netztrenneinrichtung. Dadurch sind die beiden Anschlusspunkte entkoppelt und das Potential am Anschlusspunkt des ersten Bordnetzes und am Anschlusspunkt des zweiten Bordnetzes sind unabhängig voneinander. Ist jedoch die Spannung am Anschlusspunkt des ersten Bordnetzes größer als die Spannung am Anschlusspunkt des zweiten Bordnetzes, so findet ein Stromtransport in Durchlassrichtung der Netztrenneinrichtung statt, wodurch der Anschlusspunkt des ersten Bordnetzes und der Anschlusspunkt des zweiten Bordnetzes miteinander leitend verbunden sind und damit ein nahezu gleiches Potential aufweisen.

Diese Eigenschaft der Netztrenneinrichtung kann zu einem Signaltransport vom ersten in das zweite Bordnetz und zu einem Signaltransport vom zweiten in das erste Bordnetz genutzt werden. Der Signaltransport vom ersten in das zweite Bordnetz kann dadurch erfolgen, dass eine Spannung am Anschlusspunkt des ersten Bordnetzes angepasst wird. Dies kann beispielsweise durch ein Umschalten des Anschlusspunktes zwischen zwei Spannungen, einen Digital-/Analogwandler, die Ankopplung des Anschlusspunktes an die erste Spannungsquelle über ein schaltbares Widerstandsnetzwerk, eine Verbindung des ersten Anschlusspunktes mit der ersten Spannungsquelle oder dem Referenzpotential durch einen Transistor oder ähnliches erfolgen. Solange die Spannung am Anschlusspunkt des ersten Bordnetzes größer ist als die Spannung am Anschlusspunkt des zweiten Bordnetzes, kann ein Spannungssignal in das zweite Bordnetz übertragen werden. Es ist daher besonders vorteilhaft, den Anschlusspunkt des zweiten Bordnetzes direkt oder indirekt mit dem Referenzpotential zu verbinden. Beispielsweise kann zwischen dem Anschlusspunkt des zweiten Bordnetzes und das Referenzpotential ein Widerstand geschaltet sein und das Signal kann im zweiten Bordnetz dadurch ermittelt werden, dass der Spannungsabfall an diesen Widerstand gemessen wird. Es ist jedoch auch möglich, die Spannung am Anschlusspunkt des zweiten Bordnetzes direkt für Steueraufgaben einzusetzen, also beispielsweise um das Potential am Gatter eines Transistors zu steuern, ein Relais zu schalten, die Spannung als Eingangsspannung eines Analog-/Digitalwandlers zu nutzen oder ähnliches.

Ebenso ist ein Signaltransport vom zweiten in das erste Bordnetz möglich. Dieser Signaltransport erfolgt, indem eine steuerbare Impedanz zwischen dem Anschlusspunkt des zweiten Bordnetzes und dem Referenzpotential gesteuert wird. Ist nun beispielsweise der Anschlusspunkt des ersten Bordnetzes über einen vorgegebenen Widerstand mit der ersten Spannungsquelle verbunden, so kann durch Steuerung der steuerbaren Impedanz im zweiten Bordnetz die Spannung am Anschlusspunkt des ersten Bordnetzes variiert werden. Diese Spannung kann dann beispielsweise über einen Analog-/Digitalwandler erfasst und weiterverarbeitet werden, es ist jedoch auch möglich, diese Spannung direkt für Steueraufgaben, wie beispielsweise die Steuerung eines Schalters oder als Gatterspannung eines Transistors zu nutzen. Die steuerbare Impedanz kann insbesondere auch ein Schalter sein, der im geöffneten Zustand einen nahezu unendlich großen Widerstand und im geschlossenen Zustand einen Widerstand von nahezu Null aufweist. In diesem Fall ist die Übertragung von digitalen Signalen oder beispielsweise auch von pulsweitenmodulierten Signalen möglich. Es ist jedoch auch möglich, die Impedanz in mehreren Stufen, beispielsweise durch ein steuerbares Widerstandsnetzwerk, anzupassen oder beispielsweise über einen Transistor eine kontinuierliche Steuerung der Impedanz zu erreichen.

Wesentlich ist, dass in dem erfindungsgemäßen Kraftfahrzeug, obwohl die Signale in beiden Richtungen durch einen Stromfluss übertragen werden, ein Schutz der Komponenten der Bordnetze vor den Auswirkungen eines Kurzschlusses der Bordnetze erreicht wird. Insbesondere soll verhindert werden, dass die höhere der beiden Bordnetzspannungen an den Bauteilen, die zum Betrieb mit der niedrigeren Bordnetzspannung ausgebildet sind, anliegt.

Die Signalübertragung zwischen den Bordnetzen kann in dem erfindungsgemäßen Kraftfahrzeug für eine Vielzahl von Funktionen genutzt werden. Wie eingangs erwähnt kann beispielsweise ein Kommunikationsbus, insbesondere ein CAN-Bus, vollständig in einem der beiden Bordnetze betrieben werden und durch die Kopplung der beiden Bordnetze durch eine oder mehrere Netztrenneinrichtungen ist es dennoch möglich, Informationen von diesem Bus in das andere Bordnetz zu übertragen bzw. Informationen, beispielsweise Messwerte oder Fehlerinformationen, aus dem anderen Netzwerk auszulesen. Insbesondere bei der Kopplung an einen Kommunikationsbus ist eine digitale oder pulsweitenmodulierte Übertragung der Signale zwischen den beiden Bordnetzen vorteilhaft, da Informationen ohnehin seriell und digital übermittelt werden sollen. Es kann aber auch vorteilhaft sein, Analogsignale, die beliebigen Messwerten oder Steuerwerten entsprechen, zwischen den Bordnetzen zu übertragen. So kann es vorteilhaft sein, eine Steuerung oder eine Digital-/Analog- oder Analog-/Digital-Wandlung in einem anderen Bordnetz durchzuführen als in dem Bordnetz, in dem die zu überwachende oder zu steuernde Komponente angeordnet ist.

Es ist vorteilhaft, wenn die Netztrenneinrichtung wenigstens zwei in Serie geschaltete Halbleiterbauelemente umfasst. Insbesondere kann es sich dabei um Halbleiterbauelemente mit gleicher Sperrrichtung handeln. Die Nutzung von zwei in Serie geschalteten Halbleiterbauelementen hat den Vorteil, dass bei einem Kurzschließen eines der Halbleiterbauelemente weiterhin die volle Funktionsfähigkeit der Netztrenneinrichtung gewährleistet ist, das heißt, dass auch dann ein Kurzschluss zwischen den Bordnetzen verhindert wird. Ein Kurzschließen eines einzelnen Halbleiterbauelements kann nicht in allen Fällen ausgeschlossen werden. Beispielsweise kann ein Halbleiterbauelement durch kurzfristig auftretende Überspannungen oder äußere Einflüsse oder Alterungen zerstört werden. Es ist auch möglich, dass durch Verunreinigungen die Anschlüsse eines Halbleiterbauelements kurz geschlossen werden. Die Nutzung von zwei in Serie geschalteten Halbleiterbauelementen dient also der Redundanz der Netztrenneinrichtung. Um eine solche Redundanz besonders zuverlässig zu erreichen, ist zudem vorteilhaft, wenn die beiden Halbleiterbauelemente beabstandet angeordnet sind, so dass bei einer mechanischen Beschädigung oder einem mechanischen Kurzschluss eines der Halbleiterbauelemente eine Beschädigung oder ein Kurzschluss des zweiten Halbleiterbauelements unwahrscheinlich ist.

Wie erläutert ist es notwendig, die Komponenten des Bordnetzes mit einer niedrigeren Bordnetzspannung vor der höheren Bordnetzspannung zu schützen. Um dies zu erreichen, ist es möglich, dass der Betrag der zweiten Bordnetzspannung größer ist als der Betrag der ersten Bordnetzspannung, wodurch kein Stromtransport von dem Bordnetz mit höherer Bordnetzspannung in das Bordnetz mit niedrigerer Bordnetzspannung erfolgt, so dass die Komponenten im Bordnetz mit niedrigerer Bordnetzspannung geschützt werden.

Eine Spannung von 48 V ist eine vorteilhafte Betriebsspannung für ein Bordnetz eines Kraftfahrzeugs. Viele der momentan genutzten Fahrzeugkomponenten sind für eine Nutzung in einem Bordnetz mit 12 V ausgelegt. Es ist daher vorteilhaft, wenn die erste Bordnetzspannung 12 V und die zweite Bordnetzspannung 48 V beträgt.

In modernen Kraftfahrzeugen erfolgt eine Vielzahl digitaler Steuer- und Regelaufgaben. Dementsprechend ist es häufig ausreichend, als Information, die zwischen den Bordnetzen ausgetauscht wird, einen ein- oder ausgeschalteten Zustand einer Spannung zu nutzen. Mit solchen Signalen können beispielsweise einfache Informationen, wie Defektinformationen durch ein Schalten einer Spannung übermittelt werden. Zur Übertragung komplexerer digitaler Informationen kann beispielsweise eine getaktete Übermittlung erfolgen oder die Daten können beispielsweise durch Pulsweitenmoduliertenmodulation kodiert werden.

In diesem Fall ist eine Übertragung von Informationen von dem ersten Bordnetz in das zweite Bordnetz möglich, wenn ein erstes Schaltelement zwischen der ersten Spannungsquelle und dem Anschlusspunkt des ersten Bordnetzes angeordnet ist und eine im ersten Bordnetz angeordnete erste Steuereinrichtung zum Öffnen und Schließen des ersten Schaltelements zur Steuerung der Spannung an dem Anschlusspunkt des zweiten Bordnetzes ausgebildet ist. Es ist in diesem Fall besonders vorteilhaft, den Anschlusspunkt des zweiten Bordnetzes über einen Widerstand mit dem Referenzpotential zu verbinden. Ist in diesem Fall das erste Schaltelement geschlossen, so ist die Spannung am Anschlusspunkt des zweiten Bordnetzes, abgesehen von einem Spannungsabfall an der Netztrenneinrichtung, im Wesentlichen gleich groß wie die am ersten Schaltelement anliegende Spannung. Ist das Schaltelement jedoch geöffnet, so ist die Spannung am Anschlusspunkt des zweiten Bordnetzes gleich der Spannung des Referenzpotentials.

Als Schaltelement kann eine Vielzahl von Elementen genutzt werden, beispielsweise Relais, als ICs ausgebildete Schalter, Transistoren, die durch zwei Gatterspannungen umgeschaltet werden. Die Ansteuerung der Schaltelemente kann direkt durch einen digitalen Ausgang einer Steuereinrichtung erfolgen. Es ist auch möglich, einen seriellen Kommunikationsbus des Kraftfahrzeugs direkt zur Steuerung des Schaltelements zu nutzen, wodurch die Businformationen in das zweite Bordnetz übertragen werden können. Daneben können jegliche Informationen übertragen werden, die im Kraftfahrzeug als einer von zwei Schaltzuständen vorliegen, also beispielsweise pulsweitenmodulierte Signale, zur Ansteuerung von Motoren, Fehlersignale, Ansteuersignale für Leuchtelemente.

Zur Übertragung von digital dargestellten Informationen vom zweiten in das erste Bordnetz kann ebenfalls ein Schaltelement genutzt werden. Es ist möglich, dass ein zweites Schaltelement zwischen dem Anschlusspunkt des zweiten Bordnetzes und dem Referenzpotential angeordnet ist und eine im zweiten Bordnetz angeordnete zweite Steuereinrichtung zum Öffnen und Schließen des zweiten Schaltelements zur Steuerung der Spannung am Anschlusspunkt des ersten Bordnetzes ausgebildet ist. Die Ausführungen zu dem Schaltelement im ersten Bordnetz gelten auch für das Schaltelement im zweiten Bordnetz. Der wesentliche Unterschied ist, dass ein Schließen des Schaltelements zu einem Absenken der Spannung am Anschlusspunkt des ersten Bordnetzes führt. Wird ein digitales Signal, also ein Signal mit einem hohen Signallevel und einem niedrigen Signallevel, übertragen, so führt die Übertragung des Signals in diesem Fall zu einem Invertieren des Signals, weshalb es vorteilhaft sein kann, das digitale Signal vor der Steuerung des Schaltelements oder an dem Anschlusspunkt des ersten Bordnetzes zu invertieren. Eine solche Invertierung ist besonders einfach möglich, wenn am Anschluss des ersten Bordnetzes ohnehin eine digitale Eingangsleitung einer Steuereinrichtung gesteuert wird, da die Invertierung dann in Software erfolgen kann oder wenn beispielsweise am Anschlusspunkt des ersten Bordnetzes ein Schmitt-Trigger angeschlossen ist, der in diesem Fall als invertierender Schmitt-Trigger ausgeführt sein kann.

Das erste Signal und/oder das zweite Signal kann ein pulsweitenmoduliertes Spannungssignal oder ein Digitalsignal sein. Ein Digitalsignal ist ein Signal, das durch zwei Schaltzustände beschrieben wird. Diese Schaltzustände können beispielsweise TTL-Pegel, also Spannungen von 0 V und 5 V sein, es sind jedoch auch beliebige andere Spannungen wählbar. Bei der Übertragung eines Digitalsignals kann es vorteilhaft sein, am Anschlusspunkt, an dem das Signal übertragen wird, einen Schmitt-Trigger zu nutzen, um ein besseres Schaltverhalten zu erreichen. Pulsweitenmodulierte Signale werden ebenfalls durch zwei Schaltzustände übertragen, wobei bei einem pulsweitenmodulierten Signal zur Signalübertragung die Pulsweite einer übertragenen Pulswelle mit den beiden Schaltzuständen genutzt wird. Ein Vorteil der Übertragung von Daten durch Pulsweitenmodulation ist, dass die Pulswelle für die serielle Übertragung von Daten ein Taktsignal liefert und dadurch keine separate Taktung der Datenübertragung notwendig ist. Pulsweitenmodulierte Signale können auch direkt zur Ansteuerung von Motoren genutzt werden. Aus pulsweitenmodulierten Signalen können auch analoge Steuerspannungen gewonnen werden, indem die pulsweitenmodulierte Spannung in einen Tiefpassfilter eingespeist wird und der Ausgang des Tiefpassfilters als Steuerspannung genutzt wird.

Das Halbleiterbauelement kann eine Diode sein. Die Diode ist das einfachste Bauelement, mit dem eine asymmetrische Stromübertragung, durch ein Sperren in eine Richtung und ein Durchlassen in die andere Richtung, erreicht werden kann. Dioden sind in einer Vielzahl von Ausführungsformen erhältlich, wodurch sehr hohe Durchbruchsspannungen mit sehr kleinen Leckströmen möglich sind. Beispielsweise kann der Leckstrom des Halbleiterelements in Sperrrichtung weniger als 1 µA bei einer Spannung von 70 V betragen.

In einigen Anwendungsfällen, beispielsweise wenn relativ kleine Spannungen zwischen den Bordnetzen übertragen werden sollen, kann es vorteilhaft sein, andere Halbleiterbauelemente zu nutzen, die dann jedoch in einer Art beschaltet sind, dass sie effektiv als Diode wirken. Beispielsweise kann statt einer Diode ein entsprechend beschalteter Feldeffekttransistor genutzt werden. Dies ist vorteilhaft, da der Spannungsverfall an einem Feldeffekttransistor mit entsprechend beschaltetem Gatter in Durchlassrichtung wesentlich geringer ist als die an einer Diode abfallende Spannung. Ebenso können eine Vielzahl weiterer Transistoren so verschaltet werden, dass sie ein Diodenverhalten zeigen, beispielsweise MOS-FETs, IGBTs, oder ähnliches. Wesentlich ist, dass das Halbleiterbauelement eine Sperrrichtung und eine Durchlassrichtung aufweist, was bei Halbleiterbauelementen insbesondere dadurch erreicht werden kann, dass eine Grenzschicht zwischen einem P-Halbleiter und einem N-Halbleiter vorliegt oder durch das Anliegen einer Spannung, insbesondere an einer Gateelektrode, erreicht werden kann.

Weitere Vorteile und Einzelheiten der Erfindung ergeben sich aus den im folgenden beschriebenen Ausführungsbeispielen und den Zeichnungen. Dabei zeigen:
- Fig. 1: ein Detail des Bordnetzes eines Ausführungsbeispiels eines erfindungsgemäßen Kraftfahrzeugs,
- Fig. 2: ein weiteres Detail des Bordnetzes des Kraftfahrzeugs, und
- Fig. 3: ein drittes Detail des Bordnetzes des Kraftfahrzeugs.

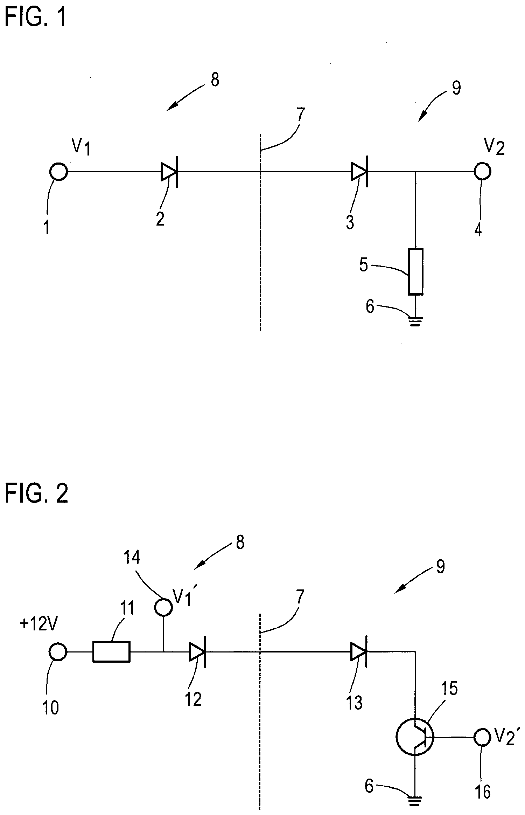

Fig. 1 - Fig. 3 zeigen jeweils Detailansichten der Bordnetze eines Kraftfahrzeugs. In Fig. 1 - Fig. 3 sind jeweils nur Komponenten gezeigt, die zum Verständnis der Signalübertragung von dem ersten in das zweite Bordnetz und umgekehrt notwendig sind.

Fig. 1 zeigt beispielhaft die Übertragung einer Information von dem ersten Bordnetz 8 in das zweite Bordnetz 9. Das zweite Bordnetz 9 weist eine höhere Bordnetzspannung auf, nämlich 48 V, als das erste Bordnetz 8, das eine Bordnetzspannung von 12 V aufweist. Beide Bordnetze haben ein gemeinsames Referenzpotential 6, wobei die Verbindung zum gemeinsamen Referenzpotential, das beispielsweise durch die Karosserie gebildet wird, für das erste Bordnetz 8 und das zweite Bordnetz 9 räumlich beabstandet erfolgt. Die Trennung des ersten Bordnetzes 8 und des zweiten Bordnetzes 9 ist symbolisch durch die Linie 7 angezeigt. Der Unterschied zwischen den Bordnetzen 8, 9 ist, dass an den Komponenten im zweiten Bordnetz 9 Spannungen von bis zu 48 V erwartet werden und an den Komponenten im ersten Bordnetz 8 Spannungen von bis zu 12 V. Daher ist es für ein zuverlässiges Funktionieren des Kraftfahrzeugs wesentlich, dass ein starker Stromfluss vom zweiten Bordnetz 9 in das erste Bordnetz 8 verhindert wird. In Kraftfahrzeugen ist üblicherweise der Minuspol einer nicht gezeigten Energiespeichereinrichtung mit dem Referenzpotential 6 zu verbinden. Daher sind in beiden Bordnetzen 8, 9 ausschließlich positive Spannungen zu erwarten. Dies bedeutet, dass die Dioden 2, 3 die gemeinsam die Netztrenneinrichtung bilden ausschließlich dann einen Stromfluss ermöglichen, wenn die Spannung am Anschlusspunkt 1 des ersten Bordnetzes 8, das heißt die Spannung V1, größer ist als die Spannung am Anschlusspunkt 4 des zweiten Bordnetzes 9, das heißt die Spannung V2.

Da Anschlusspunkt 1 im ersten Bordnetz 8 liegt ist an Anschlusspunkt 1 maximal eine Spannung von 12 V zu erwarten. Damit erfolgt nur dann ein Stromfluss durch die Netztrenneinrichtung, also die Halbleiterbauelemente 2, 3, die als Dioden ausgebildet sind, wenn die Spannung am Anschlusspunkt 4 im zweiten Bordnetz 9 kleiner ist als 12 V. Damit ist sichergestellt, dass durch die Netztrenneinrichtung die Netze nicht derart kurz geschlossen werden, dass Spannungen von mehr als 12 V in das erste Bordnetz 8 gelangen können.

Die Netztrenneinrichtung besteht hier aus zwei Halbleiterbauelementen 2, 3, da in diesem Fall das Kurzschließen eines der Halbleiterbauelemente 2 oder 3, beispielsweise durch eine mechanische oder eine elektrische Beschädigung oder eine Verunreinigung der Platine, die zu einem Kurzschluss des Halbleiterbauelements führt, nicht zu einem Kurzschließen der Bordnetze 8, 9 führt. Wird das Halbleiterbauelement 2 kurzgeschlossen, so ändert sich an der Spannungsverteilung in Fig. 1 im Wesentlichen nichts, da bereits auf der linken Seite des Halbleiterbauelements 3 keine Spannungen von mehr als 12 V möglich sind. Wird in Fig. 1 jedoch das Halbleiterbauelement 3 kurzgeschlossen, so können potentiell höhere Spannungen bis 48 V bis zum Halbleiterbauelement 2 gelangen. Dies entspricht einer Erweiterung des zweiten Bordnetzes 9 derart, dass nun das Halbleiterbauelement 2 zum zweiten Bordnetz 9 gehört, also ein Bauteil ist, an dem Spannungen von bis zu 48 V zu erwarten sind. Dennoch kann die hohe Spannung des zweiten Bordnetzes 9 nicht zu den weiteren Komponenten des ersten Bordnetzes 9 vordringen, da das Halbleiterbauelement 2 beim Anliegen einer Spannung, die höher ist als die Spannung am Anschlusspunkt 1 des ersten Bordnetzes, also auch bei jeglicher Spannung, die größer ist als 12 V, einen Stromfluss verhindert und die Netze damit trennt.

Mit dem gezeigten Teil der Schaltung können Signale, die im ersten Bordnetz 8 am Anschlusspunkt 1 anliegen in das zweite Bordnetz 9 zu Anschlusspunkt 4 übertragen werden. Die Zuführung des zu übertragenden Signals zu Anschlusspunkt 1 und die weitere Nutzung des am Anschlusspunkt 4 anliegenden Signals sind hier nicht gezeigt. Eine Spannung an Anschlusspunkt 1 kann beispielsweise durch einen Digital-/Analogwandler vorgegeben werden, es ist aber auch möglich, die Spannung V1 am Anschlusspunkt 1 beispielsweise durch ein Verbinden des Anschlusspunktes 1 mit der nicht gezeigten Spannungsversorgung, also einer Spannung von 12 V über einen regelbaren Widerstand, einen Transistor oder ähnliches einzustellen.

Die Weiterverarbeitung der am Ausschlusspunkt 4 anliegenden Spannung V2 soll hier möglichst durch ein Bauteil mit hohem Eingangswiderstand erfolgen. Dadurch kann der Widerstand des verarbeitenden Bauteils in der folgenden Diskussion vernachlässigt werden. Solche Bauteile mit einem hohem Eingangswiderstand sind beispielsweise Feldeffekttransistoren, IGBTs, Analog-/Digitalwandler oder ähnliches. Da hier davon ausgegangen wird, dass die weiteren mit Anschlusspunkt 4 verbundenen Bauteile hohe Widerstände aufweisen ist die Spannung V2 ausschließlich durch die Spannung V1, das Referenzpotential 6 sowie die Spannungen, die an den Halbleiterbauelementen 2 und 3 und an dem Widerstand 5 abfallen, bestimmt. Üblicherweise fallen an Dioden Spannungen im Bereich von einigen 100 mV ab. Der Widerstand 5 soll hier groß gewählt werden. Dies hat zum einen den Vorteil, dass zur Übertragung des Signals nur geringe Ströme notwendig sind, zum anderen wird damit der Einfluss weiterer Bauelemente verringert, wodurch eine bessere Signalübertragung vom Anschlusspunkt 1 zum Anschlusspunkt 4 möglich ist. Abgesehen von einem meist zu vernachlässigenden Spannungsverfall an den Halbleiterbauelementen 2 und 3 ist die Spannung V2 damit gleich der Spannung V1. Damit ist mit der in Fig. 1 gezeigten Schaltung die Übertragung eines beliebigen Spannungswerts V1, der an Anschlusspunkt 1 angelegt wird, vom ersten Bordnetz 8 zu dem Anschlusspunkt 4 des zweiten Bordnetzes 9, wo er als Spannung V2 vorliegt, möglich. Gleichzeitig werden die Komponenten des ersten Bordnetzes 8 wie erläutert von den höheren Spannungen im zweiten Bordnetz 9 geschützt.

Fig. 2 zeigt eine Signalübertragung in die umgekehrte Richtung, also vom zweiten Bordnetz 9 in das erste Bordnetz 8. In diesem Fall beeinflusst eine Spannung V2', die am Anschlusspunkt 16 des zweiten Bordnetzes 9 anliegt, eine Spannung V1', die am Anschlusspunkt 14 des ersten Bordnetzes anliegt. Bezüglich der Erzeugung der Spannung V2' gilt das für die Spannung V1 gesagte und für die Weiterverwertung der Spannung V1' das für die Spannung V2 gesagte. Die Halbleiterbauelemente 12, 13 entsprechen in ihrer Funktion den Halbleiterbauelementen 2, 3 und bilden eine Netztrenneinrichtung. Der Spannungsabfall an den Halbleiterbauelementen 12, 13 in Durchlassrichtung soll in der weiteren Diskussion zur Vereinfachung vernachlässigt werden. Die Spannung V2' wird durch Anschlusspunkt 16 dem Gatter eines Transistors 15 zugeführt. Der Transistor 15 kann hier im einfachsten Fall als ein Schalter dienen, der abhängig von der Spannung V2' einen sehr hohen oder sehr niedrigen Widerstand aufweist. Es ist auch möglich, den Transistor 15 als einen variablen Widerstand zu nutzen. Dies ist besonders vorteilhaft in einem linearen Bereich des Transistors möglich.

Wird der Spannungsabfall an den Halbleiterbauelementen 12, 13 vernachlässigt, so bilden der Transistor 15 und der Widerstand 11 einen Spannungsteiler. Die Spannung V1' am Anschlusspunkt 14 des ersten Bordnetzes entspricht damit dem Verhältnis des Widerstands des Transistors 15 zur Summe des Widerstands des Transistors 15 und des Widerstands 11. Da der Widerstand des Transistors 15 von der Steuerspannung V2' des Transistors abhängig ist wird durch die Spannung V2' am Anschlusspunkt 16 des zweiten Stromkreises die Spannung V1' am Anschlusspunkt 14 des ersten Stromkreises 8 gesteuert. Es erfolgt also eine Informationsübertragung vom zweiten Stromkreis 9 in den ersten Stromkreis 8.

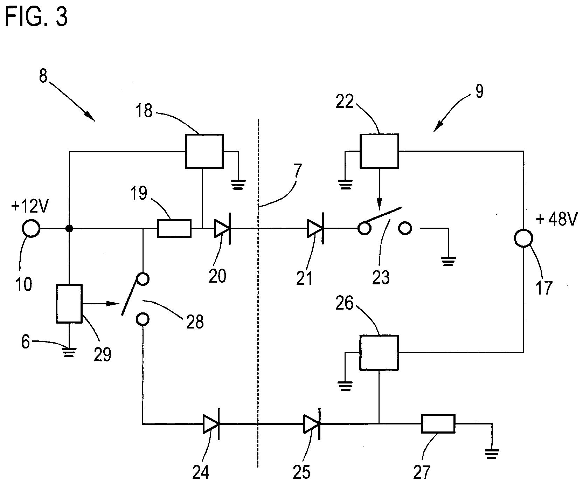

Fig. 3 zeigt einen etwas größeren Ausschnitt der Schaltung der Bordnetze des Kraftfahrzeugs, wobei hier eine Signalübertragung zwischen dem ersten Bordnetz 8 und dem zweiten Bordnetz 9 in beide Richtungen dargestellt ist.

Die wesentlichen Elemente der Schaltung sind bereits aus Fig. 1 und Fig. 2 bekannt. Die Halbleiterbauelemente 24 und 25 sowie der Widerstand 27 entsprechen den Halbleiterbauelementen 2 und 3 und dem Widerstand 5 in Fig. 1. Dort ist ein direktes Anlegen einer Spannung V1 zur Übertragung von Informationen in das zweite Bordnetz 9 gezeigt. In Fig. 3 wird die Spannung an dem Halbleiterbauelement 24, und damit an einem Anschlusspunkt des ersten Bordnetzes 8, durch einen Schalter 28 geschaltet. Ist der Schalter 28 wie gezeigt geöffnet, so fließt, solange noch ein positives Potential an einem der dem Halbleiterbauelemente 24 anliegt, Strom über die Halbleiterbauelemente 24 und 25 und den Widerstand 27 zum Referenzpotential 6, bis an dem Halbleiterbauelement 24 ein Potential anliegt, das im Wesentlichen dem Referenzpotential 6 entspricht. Damit liegt am Anschlusspunkt des zweiten Bordnetzes 9, der hier zwischen Halbleiterbauelement 25 und Widerstand 27 liegt, ein Potential an, das im Wesentlichen dem Referenzpotential 6 entspricht. Dieses Potential steuert ein Bauteil 26 im zweiten Bordnetz 9, das Teil einer Motorsteuerung sein kann.

Ist Schalter 28 geschlossen, so ist das Halbleiterbauelement 24 mit der ersten Spannungsquelle 10 verbunden, wodurch an Halbleiterbauelement 24 eine Spannung von 12 V anliegt. Wird wiederum der Spannungsabfall an den Halbleiterbauelementen 24 und 25 vernachlässigt, so fällt damit eine Spannung von ca. 12 V an Widerstand 27 ab. Diese Spannung liegt nun am Anschlusspunkt des zweiten Bordnetzes 9 zwischen Halbleiterbauelement 25 und Widerstand 27 an und steuert Bauteil 26. Damit ist durch ein Öffnen und Schließen des Schalters 28 im ersten Bordnetz 8 ein Bauteil 26 im zweiten Bordnetz 9 steuerbar. Die Steuerung des Schalters 28 erfolgt durch eine Steuereinrichtung 29. Die Steuereinrichtung 29 wird durch die erste Spannungsquelle 10 mit einer Spannung von 12 V versorgt. Die Steuerung kann beispielsweise abhängig von empfangenen Bus-Signalen erfolgen.

Ebenso ist in dem in Fig. 3 gezeigten Schaltungsausschnitt eine Informationsübertragung vom zweiten Bordnetz 9 in das erste Bordnetz 8 möglich. Hiefür ist die erste Spannungsquelle 10 über den Widerstand 19, die beiden Halbleiterbauelemente 20 und 21 und den Schalter 23 mit dem Referenzpotential 6 verbunden. Die Halbleiterbauelemente 20 und 21 entsprechen den in Fig. 2 gezeigten Halbleiterbauelementen 12 und 13 und der Widerstand 19 dem in Fig. 2 gezeigten Widerstand 11. Der Schalter 23 erfüllt hier die gleiche Aufgabe wie der in Fig. 2 gezeigte Transistor 15. Durch Einschalten des Schalters 23 kann damit die Spannung am Anschlusspunkt des ersten Bordnetzes zwischen Widerstand 19 und Halbleiterbauelement 20 zwischen dem Referenzpotential, also 0 V und +12 V umgeschaltet werden. Die Steuerung des Schalters 23 erfolgt durch eine Steuereinrichtung 22. Diese kann den Schalter 23 beispielsweise schließen wenn ein Defektsignal vorliegt. Das am Anschlusspunkt des ersten Bordnetz 8 anliegende Signal kann durch ein Bauteil 18 des ersten Bordnetzes 8 weiterverarbeitet werden. Beispielsweise kann die Spannung durch einen Spannungsteiler in den Bereich eines TLL-Pegels gebracht werden, anschließend einem Schmitt-Trigger zugeführt werden und dann einem Digitaleingang zugeführt werden, um in einen Bus eingespeist zu werden.

Wie an den gezeigten Ausführungsbeispielen zu erkennen, ist eine einfache und günstige Übertragung von Signalen von einem ersten Bordnetz in ein zweites Bordnetz und umgekehrt möglich, wobei dennoch die Bauteile eines Niederspannungsbordnetzes vor den Folgen eines Kurzschließens der Bordnetze geschützt werden können. Durch eine Verwendung von Halbleiterbauelementen wie Dioden ist eine solche Trennung der Netze sehr einfach und kostengünstig möglich. Durch eine Verwendung von zwei getrennten Halbleiterbauelementen wird zudem erreicht, dass ein Defekt eines einzelnen Bauteils nicht zu einem Kurzschluss zwischen den Netzen führt. Abhängig von den konkreten Anforderungen können verschiedene Halbleiterbauelemente eingesetzt werden. So können zum Übertragen von geringen Spannungen Feldeffekttransistoren eingesetzt werden, um den Spannungsabfall an den Halbleiterbauelementen zu minimieren. Es können auch, beispielsweise durch Nutzung von Hochspannungsdioden, besonders hohe Durchbruchspannungen erreicht werden, wodurch ein Schutz des ersten Bordnetzes auch dann möglich ist, wenn beispielsweise am Anschlusspunkt des zweiten Bordnetzes Spannungsschwankungen mit hoher Amplitude auftreten können. Durch eine passende Auswahl des Halbleiterbauelements können auch sehr kleine Leckströme von beispielsweise deutlich unterhalb 1 µA bei einer Spannung von 70 V erreicht werden.

## Patentansprüche

1. Kraftfahrzeug mit einem ersten Bordnetz (8) mit einer ersten Spannungsquelle (10), die eine erste Bordnetzspannung bereitstellt, und einem zweiten Bordnetz (9) mit einer zweiten Spannungsquelle (17), die eine von der ersten Bordnetzspannung verschiedene zweite Bordnetzspannung bereitstellt, wobei beide Bordnetzspannungen Gleichspannungen sind, wobei wenigstens eine Netztrenneinrichtung einen Anschlusspunkt (1, 14) des ersten Bordnetzes (8) und einen Anschlusspunkt (4, 16) des zweiten Bordnetzes (9) verbindet, wobei die Netztrenneinrichtung wenigstens ein Halbleiterbauelement (2, 3, 12, 13, 20, 21, 24, 25) umfasst, wobei die Netztrenneinrichtung eine Sperrrichtung, in der unterhalb einer Durchbruchspannung im wesentlichen kein Stromtransport erfolgt, und eine Durchlassrichtung, in der oberhalb einer Mindestspannung ein Stromtransport erfolgt, aufweist, wobei die Durchlassrichtung der Netztrenneinrichtung von dem ersten Bordnetz (8) in das zweite Bordnetz (9) gerichtet ist,
**dadurch gekennzeichnet,**
**dass** die Bordnetze (8, 9) dazu ausgestaltet sind, durch Steuerung einer Spannung am Anschlusspunkt (1, 14) des ersten Bordnetzes (8) ein erstes Signal vom ersten Bordnetz (8) in das zweite Bordnetz (9) zu übertragen und/oder durch Steuerung einer steuerbaren Impedanz (15, 23) zwischen dem Anschlusspunkt (4, 16) des zweiten Bordnetzes und einem Referenzpotential (6), das ein gemeinsames Referenzpotential (6) für beide Bordnetze (8, 9) bildet, ein zweites Signal von dem zweiten Bordnetz (9) in das erste Bordnetz (8) zu übertragen.

2. Kraftfahrzeug nach Anspruch 1,
**dadurch gekennzeichnet,**
**dass** die Netztrenneinrichtung wenigstens zwei in Serie geschaltete Halbleiterbauelemente (2, 3, 12, 13, 20, 21, 24, 25) umfasst.

3. Kraftfahrzeug nach Anspruch 2,
**dadurch gekennzeichnet,**
**dass** die Anschlüsse zweier Halbleiterbauelemente (2, 3, 12, 13, 20, 21, 24, 25) einer Netztrenneinrichtung einen Abstand von wenigstens 1 mm, vorzugsweise wenigstens 5 mm aufweisen.

4. Kraftfahrzeug nach einem der vorangehenden Ansprüche,
**dadurch gekennzeichnet,**
**dass** der Betrag der zweite Bordnetzspannung größer ist als der Betrag der ersten Bordnetzspannung.

5. Kraftfahrzeug nach Anspruch 3,
**dadurch gekennzeichnet,**
**dass** die erste Bordnetzspannung 12 V und die zweite Bordnetzspannung 48 V beträgt.

6. Kraftfahrzeug nach einem der vorangehenden Ansprüche,
**dadurch gekennzeichnet,**
**dass** ein erstes Schaltelement (28) zwischen der ersten Spannungsquelle (10) und dem Anschlusspunkt (1, 14) des ersten Bordnetzes angeordnet ist und eine im ersten Bordnetz angeordnete erste Steuereinrichtung (29) zum Öffnen und schließen des ersten Schaltelements (28) zur Steuerung der Spannung an dem Anschlusspunkt des zweiten Bordnetzes (9) ausgebildet ist.

7. Kraftfahrzeug nach einem der vorangehenden Ansprüche,
**dadurch gekennzeichnet,**
**dass** ein zweites Schaltelement (23) zwischen dem Anschlusspunkt (4, 16) des zweiten Bordnetzes und dem Referenzpotential (6) angeordnet ist und eine im zweiten Bordnetz (9) angeordnete zweite Steuereinrichtung (22) zum Öffnen und schließen des zweiten Schaltelements (23) zur Steuerung der Spannung am Anschlusspunkt des ersten Bordnetzes ausgebildet ist.

8. Kraftfahrzeug nach Anspruch 6 oder 7,
**dadurch gekennzeichnet,**
**dass** das erste Signal und/oder das zweite Signal ein pulsweitenmoduliertes Spannungssignal oder ein Digitalsignal ist.

9. Kraftfahrzeug nach einem der vorangehenden Ansprüche,
**dadurch gekennzeichnet,**
**dass** Halbleiterbauelement (2, 3, 12, 13, 20, 21, 24, 25) eine Diode ist.

10. Kraftfahrzeug nach einem der vorangehenden Ansprüche,
**dadurch gekennzeichnet,**
**dass** der Leckstrom des Halbleiterelements (2, 3, 12, 13, 20, 21, 24, 25) in Sperrrichtung weniger als 1 µA bei einer Spannung von 70 V beträgt.

## Claims

1. Motor vehicle comprising a first vehicle electrical system (8) having a first voltage source (10) which provides a first vehicle-electrical-system voltage, and a second vehicle electrical system (9) having a second voltage source (17), which provides a second vehicle-electrical-system voltage which is different from the first vehicle-electrical-system voltage, both vehicle-electrical-system voltages being DC voltages, at least one electrical system isolating device connecting a connection point (1, 14) of the first vehicle electrical system (8) and a connection point (4, 16) of the second vehicle electrical system (9), the electrical system isolating device comprising at least one semiconductor component (2, 3, 12, 13, 20, 21, 24, 25), the electrical system isolating device having a reverse direction, in which substantially no current transport takes place below a breakdown voltage, and a forward direction, in which current transport takes place above a minimum voltage, the forward direction of the electrical system isolating device being directed from the first vehicle electrical system (8) into the second vehicle electrical system (9),
**characterised in that**
the vehicle electrical systems (8, 9) are configured, by controlling a voltage at the connection point (1, 14) of the first vehicle electrical system (8), to transmit a first signal from the first vehicle electrical system (8) into the second vehicle electrical system (9), and/or, by controlling a controllable impedance (15, 23) between the connection point (4, 16) of the second vehicle electrical system and a reference potential (6) which forms a common reference potential (6) for both vehicle electrical systems (8, 9), to transmit a second signal from the second vehicle electrical system (9) into the first vehicle electrical system (8).

2. Motor vehicle according to claim 1,
**characterised in that**
the electrical system isolating device comprises at least two semiconductor components (2, 3, 12, 13, 20, 21, 24, 25) which are connected in series.

3. Motor vehicle according to claim 2,
**characterised in that**
the connections of two semiconductor components (2, 3, 12, 13, 20, 21, 24, 25) of an electrical system isolating device have a distance of at least 1 mm, preferably at least 5 mm.

4. Motor vehicle according to one of the preceding claims,
**characterised in that**
the value of the second vehicle-electrical-system voltage is greater than the value of the first vehicle-electrical-system voltage.

5. Motor vehicle according to claim 3,
**characterised in that**
the first vehicle-electrical-system voltage is 12 V, and the second vehicle-electrical-system voltage is 48 V.

6. Motor vehicle according to any one of the preceding claims,
**characterised in that**
a first switching element (28) is arranged between the first voltage source (10) and the connection point (1, 14) of the first vehicle electrical system, and a first control means (29) which is arranged in the first vehicle electrical system for opening and closing the first switching element (28) is configured to control the voltage at the connection point of the second vehicle electrical system (9).

7. Motor vehicle according to any one of the preceding claims,
**characterised in that**
a second switching element (23) is arranged between the connection point (4, 16) of the second vehicle electrical system and the reference potential (6), and a second control means (22) which is arranged in the second vehicle electrical system (9) for opening and closing the second switching element (23) is configured to control the voltage at the connection point of the first vehicle electrical system.

8. Motor vehicle according to either claim 6 or 7,
**characterised in that**
the first signal and/or the second signal is a pulse-width-modulated voltage signal or a digital signal.

9. Motor vehicle according to any one of the preceding claims,
**characterised in that**
the semiconductor component (2, 3, 12, 13, 20, 21, 24, 25) is a diode.

10. Motor vehicle according to any one of the preceding claims,
**characterised in that**
the stray current of the semiconductor component (2, 3, 12, 13, 20, 21, 24, 25) in the reverse direction is less than 1 µA at a voltage of 70 V.

## Revendications

1. Véhicule automobile comprenant un premier réseau de bord (8) avec une première source de tension (10) qui fournit une première tension de réseau de bord, et comprenant un deuxième réseau de bord (9) avec une deuxième source de tension (17), qui fournit une deuxième tension de réseau de bord différente de la première tension de bord, les deux tensions de réseau de bord étant des tensions continues, au moins un dispositif de séparation de réseaux reliant un point de connexion (1, 14) du premier réseau de bord (8) et un point de connexion (4, 16) du deuxième réseau de bord (9), le dispositif de séparation de réseaux comprenant au moins un composant à semi-conducteurs (2, 3, 12, 13, 20, 21, 24, 25), le dispositif de séparation de réseaux présentant un sens de fermeture, dans lequel sensiblement aucun transport de courant n'est effectué en dessous d'une tension de claquage, et un sens de passage, dans lequel un transport de courant est effectué au-dessus d'une tension minimale, le sens de passage du dispositif de séparation de réseaux étant dirigé du premier réseau de bord (8) au deuxième réseau de bord (9),
**caractérisé en ce**
**que** les réseaux de bord (8, 9) sont configurés pour transmettre un premier signal du premier réseau de bord (8) au deuxième réseau de bord (9) par la commande d'une tension au niveau du point de connexion (1, 14) du premier réseau de bord (8) et/ou pour transmettre un deuxième signal du deuxième réseau de bord (9) au premier réseau de bord (8) par la commande d'une impédance (15, 23) pouvant être commandée entre le point de connexion (4, 16) du deuxième réseau de bord et un potentiel de référence (6), qui constitue un potentiel de référence (6) commun pour les deux réseaux de bord (8, 9).

2. Véhicule automobile selon la revendication 1,
**caractérisé en ce**
**que** le dispositif de séparation de réseaux comprend au moins deux composants à semi-conducteurs (2, 3, 12, 13, 20, 21, 24, 25) branchés en série.

3. Véhicule automobile selon la revendication 2,
**caractérisé en ce**
**que** les bornes des deux composants à semi-conducteurs (2, 3, 12, 13, 20, 21, 24, 25) d'un dispositif de séparation de réseaux sont à une distance d'au moins 1 mm, de préférence d'au moins 5 mm.

4. Véhicule automobile selon l'une quelconque des revendications précédentes, **caractérisé en ce**
**que** la valeur de la deuxième tension de réseau de bord est supérieure à la valeur de la première tension de réseau de bord.

5. Véhicule automobile selon la revendication 3,
**caractérisé en ce**
**que** la première tension de réseau de bord est de 12 V et la deuxième tension de réseau de bord est de 48 V.

6. Véhicule automobile selon l'une quelconque des revendications précédentes, **caractérisé en ce**
**qu'**un premier élément commutateur (28) est disposé entre la première source de tension (10) et le point de connexion (1, 14) du premier réseau de bord, et en ce qu'un premier dispositif de commande (29) disposé dans le premier réseau de bord est réalisé pour ouvrir et fermer le premier élément commutateur (28) afin de commander la tension au niveau du point de connexion du deuxième réseau de bord (9).

7. Véhicule automobile selon l'une quelconque des revendications précédentes, **caractérisé en ce**
**qu'**un deuxième élément commutateur (23) est disposé entre le point de connexion (4, 16) du deuxième réseau de bord et le potentiel de référence (6), et en ce qu'un deuxième dispositif de commande (22) disposé dans le deuxième réseau de bord (9) est réalisé pour ouvrir et fermer le deuxième élément commutateur (23) afin de commander la tension au niveau du point de connexion du premier réseau de bord.

8. Véhicule automobile selon la revendication 6 ou 7,
**caractérisé en ce**
**que** le premier signal et/ou le deuxième signal est un signal de tension à largeur d'impulsion modulée ou un signal numérique.

9. Véhicule automobile selon l'une quelconque des revendications précédentes, **caractérisé en ce**
**que** le composant à semi-conducteurs (2, 3, 12, 13, 20, 21, 24, 25) est une diode.

10. Véhicule automobile selon l'une quelconque des revendications précédentes, **caractérisé en ce**
**que** le courant de fuite du composant à semi-conducteurs (2, 3, 12, 13, 20, 21, 24, 25) dans le sens de fermeture est inférieur à 1 µA pour une tension de 70 V.
